# EUROPEAN PATENT SPECIFICATION

(11) **EP 3 352 043 B1**
(45) Date of publication and mention of the grant of the patent: **11.11.2020**
(21) Application number: 17152841.7
(22) Date of filing: 24.01.2017
(51) Int. Cl.: G06F 1/16, H04M 1/22, H04M 1/725

(54) **ILLUMINATED SMARTWATCH WITH WATCHSTRAP AND METHOD FOR OPERATING AN ILLUMINATED SMARTWATCH**
BELEUCHTETES INTELLIGENTE UHR MIT UHRBAND UND VERFAHREN ZUM BETREIBEN EINES BELEUCHTETEN INTELLIGENTE UHR
MONTRE INTELLIGENTE ECLAIREE AYANT UN BRACELET ET PROCÉDÉ DE FONCTIONNEMENT D'UNE MONTRE INTELLIGENTE ECLAIREE

(43) Date of publication of application: 25.07.2018
(73) Proprietor: Vestel Elektronik Sanayi ve Ticaret A.S., 45030 Manisa (TR)
(72) Inventor: DERELI, Ulas, 45030 Manisa (TR); CERRAHOGLU, Dursun Sedat, 45030 Manisa (TR)
(74) Representative: Kehl, Ascherl, Liebhoff & Ettmayr Patentanwälte Partnerschaft mbB

(56) References cited:
- WO-A2-2011/053804
- GB-A- 2 528 392
- US-A1- 2007 243 911
- US-A1- 2011 175 747
- US-A1- 2012 030 043

## Description

The present invention refers to a watchstrap according to claim 1, a smartwatch with such a watchstrap according to claim 4, and according to claim 5, a method for operating such a watchstrap.

The invention further refers to a computer program product for executing such a method.

### Background of the Invention

In recent years, smartwatches became popular. People do many things on a smartwatch without requiring a smartphone. User can customize the watch face and its color. Also, user can change the watchstrap of smartwatch according to clothes. Because many people pay attention color match between clothes and watch. Another color match is between watchstrap and color watch face. Normally, user customizes the color of watch face based on color of watchstrap.

Document GB2528392A discloses a wrist wearable apparatus, such as a bracelet or watch strap, comprising links where each of the links includes a link-to-link mechanical interface and a link-to-link electrical interface, wherein the links comprise a circuitry link and a battery link, where the circuitry link is mechanically coupled to the battery link via at least one pair of link-to-link mechanical interfaces and where the circuitry link is electrically coupled to the battery link via at least one pair of link-to-link electrical interfaces. The links may comprise a processor, memory, clock or data signal contacts, or addresses. There may also be master and slave links. The circuitry link may comprise detection or emission circuitry. In other embodiments, there is a method and an apparatus described consisting of transmitting data via a plurality of link-to-link electrical interfaces along a string of mechanically and communicatively coupled links.

Document WO2011053804A2 discloses an illumination device, having a lightguide optically coupled to a light source and a transducer for supplying power to the light source by converting energy received from a remote transmitter. Energy received from a remote transmitter can comprise radiofrequency waves, microwaves, infrared radiation, visible light, ultraviolet light, sunlight, sound waves or heat.

Document US2007/0243911A1 discloses a cover-changeable cellular telephone which has a sub-display section and which automatically adjusts and sets an illumination pattern without involvement of the user's manual adjustment and setting, as well as rendering display quality stable and simplifying operation for changing the cover. A mobile terminal has a cabinet, a cover member which is selected from a plurality of types of cover members and attached to the cabinet, an illumination section illuminating outside the cabinet, a storage section for storing a plurality of types of illumination patterns for the illumination section, and a control section for causing the illumination section to illuminate according to a preset one of the respective illumination patterns. The terminal further has separate identification means provided on the cover member, wherein, when the cover member is attached to the cabinet, the control section selects one from the respective illumination patterns assigned to the identification means.

### Object of the Invention

It is therefore the object of the present invention to provide a watchstrap, a smart watch and a method, wherein the comfort and/or flexibility of a user should be increased.

### Description of the Invention

The before mentioned object is solved by a watchstrap according to claim 1. Said watchstrap preferably comprises a main body for coupling with an arm of a human being, wherein the main body has at least two ends, wherein a first end comprises a first coupling means for connecting to a smartwatch housing and a second end comprises a second coupling means for connecting to said smartwatch housing, at least one data and/or signal unit for transforming data and/or signals inputted via said first coupling means into transformation data and/or signals, wherein said transformation data and/or signals are transferable via said respective coupling means back to a data and/or signal source, in particular the smartwatch or smartwatch processor unit, for causing adjustments of smartwatch illumination in dependency of the transformation data and/or signals.

This solution is beneficial since color of watch face is hereby preferably automatically customized based on color of watchstrap respectively.

Further preferred embodiments of the present disclosure are subject-matter of the Z dependent claims.

At least one coupling means and preferably both coupling means are providing according to a preferred embodiment of the present disclosure data and/or signal transfer means connected to the data and/or signal unit, wherein data and/or signals can be feed into watchstrap via said coupling means. This embodiment is beneficial since watchstrap can be coupled to both sides of smartwatch. Since smartwatches generally use screens the orientation of watch face can be adjusted automatically in dependency of the coupled watchstrap

The data and/or signal unit comprises according to a further preferred embodiment of the present disclosure multiple, in particular three or more than three, different voltage divider circuits, wherein data and/or signals are preferably fed in via said first coupling means as voltage, wherein said voltage divider circuits provide output voltages, wherein the data and/or signal unit further comprises at least a converting unit, in particular an ADC block, for converting said output voltages into digital data, wherein said digital data corresponds to predefined operation values for modifying a smartwatch illumination.

Thus, watchstrap preferably includes three resistors that preferably represent red, green and blue. Many different colors are defined based on value of resistors. The RGB color model is an additive color model in which red, green and blue are added together in various ways to reproduce a broad array of colors.

A light source unit, in particular a screen, of smartwatch is according to a further preferred embodiment of the present disclosure configured to emit light, in particularly in a predefined number, of different colors, in particular less than 10 colors, or less than three or exactly three or less than two or exactly two or exactly one color, wherein the data and/or signal unit provides data and/or signals representing the respective color, wherein said provided data and/or signals are transferable to smartwatch for adjusting the illumination of said smartwatch, in particularly for matching the color of illumination of the smartwatch with the color of watchstrap. This embodiment is beneficial since a user can switch the watchstrap and the smartwatch illumination, preferably automatically, adapts to the color of the respective watchstrap.

The voltage divider circuit is according to a further preferred embodiment of the present disclosure configured in dependency of the color of said watchstrap. Thus, watchstraps of different colors preferably have different voltage divider circuit configurations.

The data and/or signal unit comprises according to a further preferred embodiment of the present disclosure a wireless data transfer unit, in particular NFC and/or Bluetooth low energy, for data exchange with a further device, in particular a smartwatch or a smartphone, wherein adjustment data receivable via said wireless data transfer unit causes operating of said light source unit in dependency of said adjustment data.

The present disclosure further refers to a smartwatch according to claim 4. Said smartwatch comprises preferably at least one coupling element and preferably two coupling elements for coupling with a coupling means and preferably for coupling with two coupling means of a watchstrap according to any of the proceeding claims, wherein data and/or signals are out-puttable via said coupling elements and wherein transformation data and/or signals transformed by watchstrap are receivable via said coupling elements, wherein a processor unit processes the transformation data and/or signals for modifying an illumination, in particular coloring of said illumination, in dependency of said transformation data and/or signals. The modification of smartwatch illumination respectively smartwatch screen adjustment can happen automatically in dependency of a user command or confirmation.

The present disclosure further refers to a method for changing the color of watchstrap of a smartwatch according to claim 5. This method comprises preferably at least the steps: Providing a wrist watch, in particularly a smartwatch, having a watchstrap according to any of claims 1 to 3. Transmitting data and/or signals from a smartwatch to the watchstrap; Transforming said data and/or signals by watchstrap in dependency of a coloring of said watchstrap; Transmitting said transformation data and/or signals to a processor unit of smartwatch for adapting the illumination of a watch face in dependency of said transformed data and/or signals.

The transmitted data and/or signals are according to a further preferred embodiment of the present disclosure transformed by a data and/or signal transforming unit of said watchstrap, wherein said data and/or signal transforming unit preferably comprises multiple, in particular three or more than three, different voltage divider circuits, wherein data and/or signals are fed in via said first coupling means preferably as voltage, wherein said voltage divider circuits provide output voltages, wherein the data and/or signal unit preferably further comprises at least an ADC block for converting said output voltages into digital data, wherein said digital data corresponds to predefined operation values for modifying a smartwatch illumination. Thus, a wrist watch, in particularly a smartwatch, preferably includes three constant resistors.

Circuit connection is preferably completed when watchstrap is connected to smartwatch. So, three voltage divider circuits are preferably completed with resistors in watchstrap. Voltage divider circuit preferably produces output voltage that is transmitted to a transformation unit respectively converting unit, in particular an ADC block. Analogue output voltages are thus converted to digital data. The software of smartwatch preferably includes at least a list of composed digital data that represents color scale, therefore the light source unit is preferably operated based on the digital data. Digital data corresponds to any value of said list that preferably represents all color scale. Consequently, color of watch face is adjusted automatically by smartwatch based on color of watchstrap. Respectively digital data converted by ADC block corresponds to any color from color scale. Color of watchstrap is detected by smartwatch. Color of watch face is adjusted automatically by smartwatch based on color of watchstrap.

It is additionally or alternatively further conceivable that converting unit, in particular ADC block, is part of the smartwatch.

The smartwatch transmits according to a further preferred embodiment of the present disclosure constant voltage via at least one coupling element to watchstrap.

It is alternatively possible that watchstrap comprises a RFID unit which is configured to transfer data and/or signals to smartwatch in case said smartwatch detects such a watchstrap. Wherein said data and/or signals represent at least information about a desired coloring of watch face respectively commands or operation parameters for modifying the illumination of said watch face.

The digital data is fed back according to a further preferred embodiment of the present disclosure from watchstrap to a processor unit of smartwatch for processing the transformation data and/or signals for modifying an illumination, in particular coloring of said illumination, of said smartwatch, in particular watch face, in dependency of said transformation data and/or signals.

A light source unit of smartwatch is according to a further preferred embodiment of the present disclosure configured to emit light, in particularly in a predefined number, of different colors, in particular less than 10 colors, or less than three or exactly three or less than two or exactly two or exactly one color, wherein the data and/or signal unit provides data and/or signals representing the respective color, wherein said provided data and/or signals are transferred to smartwatch for adjusting the illumination of said smartwatch, in particularly for matching the color of illumination of the smartwatch with the color of watchstrap.

The watchstrap comprises according to a further preferred embodiment of the present disclosure at least two watchstrap parts, wherein one watchstrap part is connected to the first coupling means and the second watchstrap part is connected to the second coupling means, wherein each coupling means provides data and/or signals for transformation, wherein one or both watchstrap parts are equipped with a data and/or signal unit, wherein the illumination of watch face depends on predefined rules in case said watchstraps have different colors. Alternatively, said watchstrap comprises at least two watchstrap parts, wherein one watchstrap part is connected to the first coupling means and the second watchstrap part is connected to the second coupling means, wherein one or both coupling means provide data and/or signals for transformation, wherein just one watchstrap part is equipped with a data and/or signal unit.

The present disclosure further refers to a computer program product for executing a method according to claims 5 to 9.

Furthermore, it is conceivable that an inventive watchstrap, smartwatch or method for operating an illumination of a smartwatch has additionally or alternatively the features disclosed in the following:
Thus, according to a further embodiment of this invention said watchstrap is connectable to a wrist watch and comprises at least a main body for coupling with an arm of a human being, wherein the main body has at least two ends, wherein a first end comprises a first coupling means for connecting to a wrist watch housing and a second end comprises a second coupling means for connecting to said wrist watch housing, at least one adjustable light source unit for illuminating the main body, at least one data and/or signal unit for transferring data and/or signals causing a defined operation of the light source unit.

This solution is beneficial since the watchstrap can be illuminated in different manners, in particular in such a manner that the color of illumination fits to the coloring of a wristwatch. The disclosure highly preferably provides a color match automatically between color of watchstrap and color of watch, in particular with illumination of watch face and/or watch frame.

At least one coupling means and preferably both coupling means are providing according to a preferred embodiment of the present disclosure data and/or signal transfer means connected to the data and/or signal unit, wherein data and/or signals can be feed into watchstrap via said connection means. This embodiment is beneficial since data and/or signals and/or energy can be supplied from a watch via said coupling means to watchstrap. No further software coupling etc. is necessary, thus the color of watchstrap follows color changes of watch face. Preferably are similar or identical data and/or signals sent to a watch face illumination means and to watchstrap, in particularly via said coupling means.

The data and/or signal unit comprises multiple, in particular three or more than three, different voltage divider circuits according to a further preferred embodiment of the present disclosure. Data and/or signals feed into respectively to said watchstrap via said first coupling means are different voltages, wherein said voltage divider circuits preferably provide output voltages. The data and/or signal unit further comprises preferably at least an ADC block for converting said output voltages into digital data, wherein said digital data corresponds to predefined operation values for operating the light source unit.

Thus, the light source unit is preferably configured to emit light in a predefined number of different colors, in particular less than 100 colors or less than 50 colors or less than 10 colors or less than three or exactly three or less than two or exactly two or exactly one color, wherein the data and/or signal unit provides data and/or signals representing the respective color, wherein said provided data and/or signals are transferable to a watch, in particular smart watch, for adjusting the illumination of said smartwatch, in particularly for matching the color of illumination of the smartwatch with the color of watchstrap. The provided data and/or signals are preferably transferable to a processor unit of said smartwatch, wherein the processor unit preferably automatically operates the watch light source unit in such a manner that the emitted light matches the color of the light respectively of watchstrap.

The light source unit, in particular inside the watchstrap, comprises according to a further preferred embodiment of the present disclosure at least three different light sources, in particular a green light source, a blue light source and a red-light source, wherein each of said light sources is operated in dependency of digital data outputted by said ADC block.

Highly preferably multiple light source units and/or light guide means for directing the light of at least one light source are arranged inside the main body or part of the main body.

At least one light source and preferably multiple, the majority or all light sources are according to a further preferred embodiment of the present disclosure housed in by said main body, wherein said main body is at least partially transparent for light emitted by said light sources. At least partially transparent preferably means that more than 5% or more than 10% or more than 20% more than 30% more than 40% more than 50% or more than 60% or more than 70% or more than 80% of the emitted light of a light source reaches the surface of said watchstrap. Each light source is preferably a LED or OLED.

The data and/or signal unit comprises according to a further preferred embodiment of the present disclosure a wireless data transfer unit, in particular Bluetooth low energy, for data exchange with a further device, in particular a smart watch or a smartphone, wherein adjustment data receivable via said wireless data transfer unit causes operating of said light source unit in dependency of said adjustment data. This embodiment is beneficial since the coloring of watchstrap can be changed remotely. The watchstrap further preferably comprises an, preferably rechargeable, energy storage means for operating the electronic components.

The main body comprises according to a further preferred embodiment of the present disclosure a first part and a second part, wherein the first part and the second part can be fixed in multiple relative positions to each other by means of a fastening unit, wherein the first part comprises the first coupling means and wherein the second part comprises the second coupling means.

The present disclosure further refers to a method for changing the color of watchstrap of a wrist watch, in particularly a smartwatch. Said method preferably comprises at least the steps: Providing a wrist watch having a watchstrap; Transmitting data and/or signals from a smart device, in particular a smartphone or a smart watch, to the watchstrap, wherein the data and/or signals are representing a desired coloring; Operating said at least one adjustable light source unit of watchstrap in dependency of said data and/or signals.

This method is beneficial since the coloring of watchstrap or watchband is adjustable respectively changeable.

The smart device preferably transfers data and/or signals via a wireless connection to the data and signal unit of watchstrap. Said data and/or signals preferably represent operation parameters for operating the light source unit of watchstrap. Thus, said operation parameters preferably represent predefined or predefineable light colors or illumination schemes transmitted in dependency of operation parameters of one or more further applications running on said smart device, in particular smart watch or smart phone.

The wrist watch is a smart watch, wherein the smart watch comprises a smart watch light source unit for illuminating a frame and/or display of said smart watch, wherein data and/or signals representing operation parameters of the smart watch light source or the color illuminating the frame and/or display of said smart watch are transmitted via at least one coupling means from the smart watch to the watchstrap, wherein said data and/or signals are processed by the data and/or signal unit for outputting operation parameters for operating said light source unit of the watchstrap.

Additionally, or alternatively to data and/or signal exchange via said coupling means it is also conceivable that the smart watch and the watchstrap are exchanging data and/or signals via a wireless connection.

Additionally, or alternatively it is also conceivable that the smartwatch and the watchstrap are coupled by said coupling means and a further smart device, like a smartphone, is connected or connectable via said wireless connection at the same time or in a row.

The smart device is a smartphone or tablet PC or smartwatch or smart TV. Smart means herby any device that is connectable to the internet and/or that has an own IP address and/or that has input means for inputting commands, like a touch screen. The smart device, in particular smartphone, transfers data and/or signals via a wireless connection to the data and signal unit of watchstrap, wherein said data and/or signals represent operation parameters for operating the light source unit of watchstrap, wherein said operation parameters represent light colors, wherein said light colors are adjustable by an operator by defining different operation parameters with said smartphone or tablet PC, or wherein said operation parameters represent predefined or predefineable light colors or illumination schemes transmitted in dependency of operation parameters of a further application running on said smart device, in particular smart watch or smart phone or tablet PC.

At least one first part of the watchstrap is preferably illuminated in a color different from a second part of said watchstrap and/or the illumination preferably represents a heartbeat measured by a sensor unit, wherein the sensor unit is part of the smart device or connected to the smart device and/or the illumination preferably represents a music beat of music played by said smart device, wherein the illumination flashes respectively gloves in dependency of said music beat and/or the illumination preferably represents a notification, in particular of an incoming call or an incoming message, wherein said notification is outputted by said smart device.

Further benefits, goals and features of the present disclosure will be described by the following specification of the attached figures, in which exemplarily components of the disclosure are illustrated. Components of the systems and methods according to the disclosures, which match at least essentially with respect to their function can be marked with the same reference sign, wherein such components do not have to be marked or described multiple times with respect to said figures.

In the following the disclosure is just exemplarily described with respect to the attached figures.

### Brief Description of the Drawing

- Fig. 1: represents a state of the art process;
- Fig. 2: shows a smartwatch and a watchstrap according to the present disclosure ;
- Fig. 3a: shows voltage divider circuits preferably used in the watchstrap according to the present disclosure ;
- Fig. 3b: shows a flow chart representing the method of the present disclosure; and
- Fig. 4: shows a further flow chart representing the method of the present disclosure.

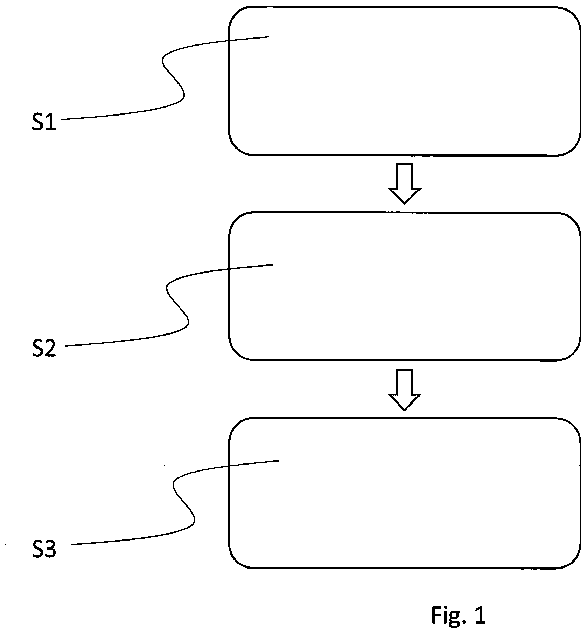

User change watchstraps based on color of clothes. In prior art system, if user pays attention color match between color of watch face and color of watchstrap, color of watch face can be customized manually. According to S1 in fig. 1 user customizes watch face, in particular color of watch face. Then in S2 user changes watchstrap for color matching according to interest or cloths. Then in step S3 user customizes color of watch face again manually based on color of watchstrap. Thus, adapting the overall appearance of a smartwatch requires multiple steps and is therefore not user friendly.

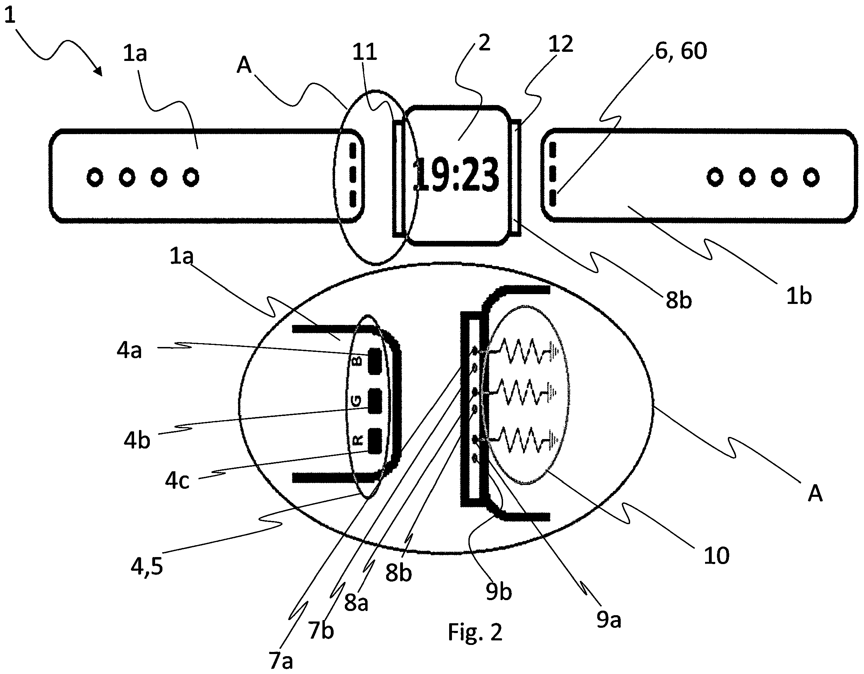

Fig. 2 shows a smartwatch 2. Said smartwatch 2 comprises at least a screen for visually outputting information and a processor unit for operating said smartwatch 2. Smartwatch 2 is preferably connectable to the internet. Fig. 2 further shows a watchstrap 1, wherein said watchstrap 1 comprises a first watchstrap part 1a and a second watchstrap part 1b. Each watchstrap part 4, 6 comprises a coupling means 5, 60 for coupling with coupling elements 11, 12 of smartwatch 2. Reference letter A indicates schematically a detailed illustration of first coupling means 5 and first coupling element 11. Reference number 4 indicates a data and/or signal transformation unit, wherein said data and/or signal transformation unit 4preferably comprises a first voltage divider circuit 4a processing the incoming data and/or signals with respect to a predefined color, in particularly blue, respectively color value and a second voltage divider circuit 4b processing the incoming data and/or signals with respect to a predefined color, in particular green, respectively color value and a third voltage divider circuit 4c processing the incoming data and/or signals with respect to a predefined color, in particular red, respectively color value. The data and/or signal transformation unit 4 outputs data and/or signals for processing by a converting unit, in particular an analogous value to digital data converting unit, like an ADC unit, which can be part of watchstrap 1 or smartwatch 2. Said ADC unit (not shown) transforms data and/or signals of voltage divider circuit 4 into digital data. Smartwatch provides preferably constant voltages via coupling element 11, 12, wherein said constant voltages are processed by data and/or signal transformation unit 4. Said preferably constant voltages and the preferably transformed voltages are exchanged via contacts 7a, 7b with first voltage divider circuit 4a and via contacts 8a, 8b with first voltage divider circuit 4b and via contacts 9a, 9b with first voltage divider circuit 4c. Reference number 10 represents a voltage supply means of smartwatch 2.

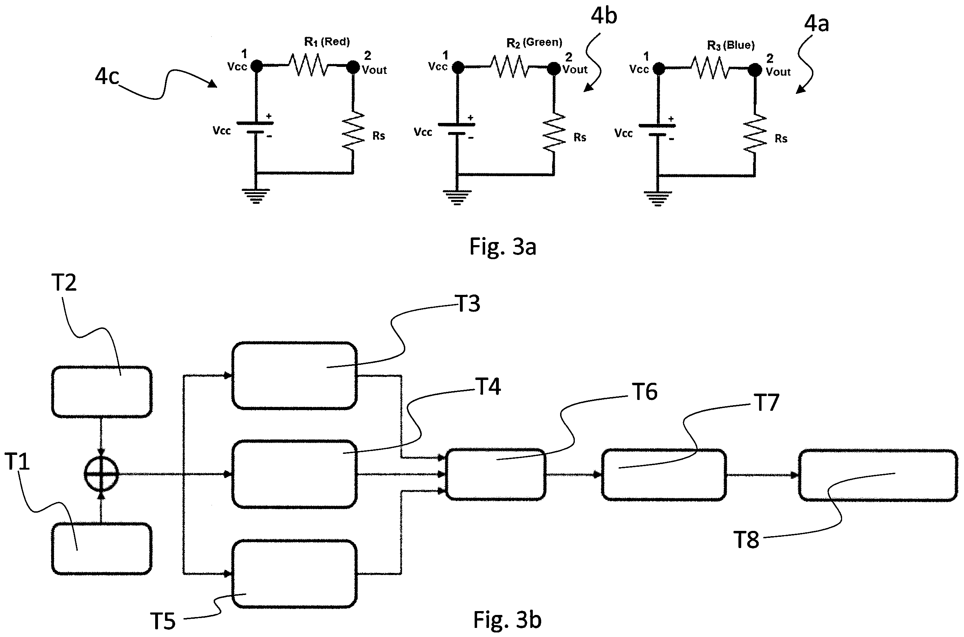

Fig. 3a shows schematically and exemplarily illustrations of first voltage divider circuit 4a, second voltage divider circuit 4b and third voltage divider circuit 4c.

Fig. 3b shows a flow chart representing a general example of the method according to the present disclosure. T1 represents a smartwatch and T2 represents a watchstrap, wherein smartwatch and watchstrap are coupled. After a connection between watchstrap and smartwatch is established, smartwatch provides voltages via contacts 7a-9b (cf. fig. 2) to watchstrap. First voltage divider circuit T3, second voltage divider circuit T4 and fourth voltage divider circuit T5 are transforming said preferably constant voltage into further analogous respectively voltage values. Said transformed data and/or signals is processed in T6 by a converting unit, in particular a ADC unit, which is preferably part of watchstrap or smartwatch. Said converting unit preferably outputs digital data representing operation parameters for modifying the illumination of the smartwatch. Said data and/or signals are preferably detected by smartwatch in step T7. Thus, preferably a color detection respectively a data detection representing color data for operating an illumination device takes place in T7. In step T8 a customizable part of the smartwatch is illuminated in dependency of the processed data, in particular automatically.

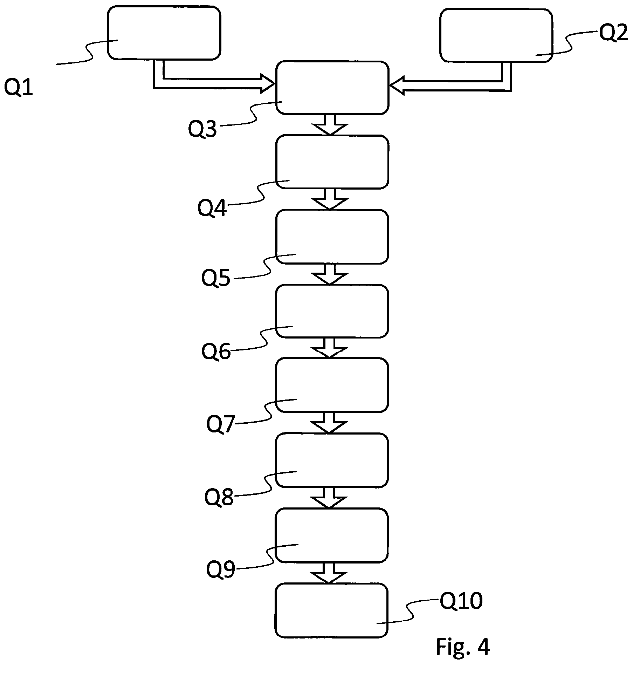

Fig. 4 shows in comparison a more detailed flow chart of the method according to the present disclosure. Q1 represents providing of a watchstrap which includes multiple, in particular three, resistors. Said resistors are preferably representing colors red, green and blue. Q2 represents providing of a smartwatch also including multiple, in particular three resistors. Resistors of smartwatch are preferably constant resistors. According to Q3 the voltage divider circuit connection is completed when watchstrap is connected to smartwatch. Smartwatch preferably supplies in a next step (Q4) a preferably constant voltage to voltage divider circuit of watchstrap. The multiple different divider circuits produce multiple different output voltages, in particular three different divider circuits produce three different output voltages (Q5). In step Q6 said multiple, in particular three, output voltages are transmitted to a converting means, in particular an ADC block. Said converting means is preferably part of said watchstrap or smartwatch. In step Q7 analogue output voltages provided by divider circuits are converted to digital data by said converting means. Said digital data preferably corresponds to any value of a list or look-up table that represents color scale (Q8). Due to matching said list respectively look-up table data representing the color of watchstrap is detected by said smartwatch or configuration data is provided that directly causes the smartwatch to adjust illumination according to said data (Q9). According to step Q10 color of watch face of smartwatch is preferably automatically adjusted in dependency of the color of watchstrap.

Thus, the present disclosure refers to a watchstrap 1 connectable to a smartwatch 2. Said watchstrap 1 preferably comprises at least a main body for coupling with an arm of a human being, wherein the main body has at least two ends, wherein a first end comprises a first coupling means 5 for connecting to a smartwatch housing and a second end comprises a second coupling means 60 for connecting to said smartwatch housing, at least one data and/or signal unit 4 for transforming data and/or signals inputted via said first coupling means 5 into transformation data and/or signals, wherein said transformation data and/or signals are transferable via said respective coupling means 5, 60 back to a data and/or signal source for causing adjustments of smartwatch 2 illumination in dependency of the transformation data and/or signals.

### List of reference numbers

- 1: watchstrap
- 1a: first watchstrap part
- 1b: second watchstrap part
- 2: smartwatch
- 4: data and/or signal transformation unit
- 4a: first voltage divider circuit
- 4b: second voltage divider circuit
- 4c: third voltage divider circuit
- 5: first coupling means
- 6: further voltage divider circuit
- 7a: contact for data and/or signal transfer with first voltage divider circuit 4a
- 7b: contact for data and/or signal transfer with first voltage divider circuit 4a
- 8a: contact for data and/or signal transfer with first voltage divider circuit 4b
- 8b: contact for data and/or signal transfer with first voltage divider circuit 4b
- 9a: contact for data and/or signal transfer with first voltage divider circuit 4c
- 9b: contact for data and/or signal transfer with first voltage divider circuit 4c
- 10: voltage supply
- 11: first coupling element
- 12: second coupling element
- 60: second coupling means
- S1-S3: steps 1 to 3
- T1-T8: steps 1 to 8
- Q1-Q10: steps 1 to 10

## Claims

1. Watchstrap (1) connectable to a smartwatch (2),
the watchstrap (1) comprising at least:
a main body for coupling with an arm of a human being,
wherein the main body has at least two ends, wherein a first end comprises a first coupling means (5) connectable to a smartwatch housing and a second end comprises a second coupling means (60) connectable to said smartwatch housing,
**characterized in that** the watchstrap further comprises:
at least one unit (4) configured to transform a constant voltage inputted via said first coupling means (5) into digital data,
wherein the unit (4) comprises three or more than three different voltage divider circuits (4a, 4b, 4c), wherein the constant voltage is fed to each of the three or more than three different voltage divider circuits, wherein said voltage divider circuits (4a, 4b, 4c) are configured to provide respective output voltages,
wherein the unit (4) further comprises at least an ADC block configured to convert said respective output voltages into digital data, wherein said digital data corresponds to predefined operation values representing a color based on the red, green and blue, RGB, model,
wherein the watchstrap is configured to transfer said digital data via said first coupling means (5) to the smartwatch, such that a smartwatch (2) illumination color is adjusted in dependency of the digital data.

2. Watchstrap according to claim 1,
wherein at least one coupling means (5) and preferably both coupling means (5, 60) are providing digital data transfer means connected to the unit, wherein digital data is fed into the watchstrap (1) via said coupling means (5, 60).

3. Watchstrap according to claim 1, wherein the unit (4) comprises a wireless data transfer unit, wherein digital data is exchanged with a further device wherein adjustment data is received via said wireless data transfer unit.

4. Smartwatch comprising:
a watchstrap (1) according to any of the preceeding claims,
a light source,
at least one coupling element for coupling with at least the first coupling means of the watchstrap,
wherein the smartwatch is configured to output a constant voltage via said at least one coupling element and to receive digital data transferred by the watchstrap via said at least one coupling element
wherein a processor unit is configured to process the digital data for modifying an illumination color in dependency of said digital data,
wherein said digital data corresponds to predefined operation values representing a color based on the red, green and blue, RGB, model.

5. Method for changing the illumination color of a watch face of a smartwatch, at least comprising the steps:
Providing a smartwatch (2) having a watchstrap (1), according to any of claims 1 to 3,
Transmitting digital data from the smartwatch (2) to the watchstrap (1),
Transforming said digital data by a unit of watchstrap (1),
wherein the unit (4) comprises three or more than three different voltage divider circuits (4a, 4b, 4c), wherein the constant voltage is fed to each of the three or more than three different voltage divider circuits, wherein said voltage divider circuits (4a, 4b, 4c) are configured to provide respective output voltages,
wherein the unit (4) further comprises at least an ADC block configured to convert said respective output voltages into digital data, wherein said digital data corresponds to predefined operation values representing a color based on the red, green and blue, RGB, model,
Transferring said digital data via said first coupling means (5) to the smartwatch, such that a smartwatch (2) illumination color is adjusted in dependency of the digital data.

6. Method according to claim 5, wherein the digital data is fed to a processor unit for processing the digital data for modifying an illumination of said smartwatch (2) in dependency of said digital data.

7. Method according to claims 5 to 6, wherein a light source unit of the smartwatch (2) is configured to emit light of different colors, wherein the unit provides digital data representing the respective color, wherein said provided digital data is transferred to the smartwatch for adjusting the illumination of said smartwatch (2),

8. Method according to claims 5 to 7, wherein the watchstrap (1) comprises at least two watchstrap parts (1a, 1b), wherein one watchstrap part (1a) is connected to the first coupling means (5) and the second watchstrap part (1b) is connected to the second coupling means (60),
wherein each coupling means (5, 60) provides digital data for transformation,
wherein one or both watchstrap parts (1a, 1b) are equipped with a unit (4),
wherein the illumination of the watch face depends on predefined rules in case said watchstrap (1) has differently configured voltage divider circuits (4a, 4b, 4c).

9. Method according to claims 5 to 8, wherein the watchstrap (1) comprises at least two watchstrap parts (1a, 1b), wherein one watchstrap part (1a) is connected to the first coupling means (5) and the second watchstrap part (1b) is connected to the second coupling means (60),
wherein one or both coupling means (5, 60) provide digital data for transformation,
wherein just one watchstrap part (1a) is equipped with the unit (4).

10. Computer program product comprising instructions which, when the program is executed by the smartwatch of claim 4, cause the smartwatch to carry out a method according to claims 5 to 9.

## Patentansprüche

1. Uhrarmband (1), dass an eine Smartwatch (2) angekoppelt werden kann,
das Uhrarmband (1) weist mindestens auf:
einen Hauptkörper zur Kopplung mit einem Arm eines menschlichen Wesens,
wobei der Hauptkörper mindestens zwei Enden aufweist, wobei ein erstes Ende ein erstes Kopplungsmittel (5) umfasst, das mit einem Smartwatch-Gehäuse verbindbar ist, und ein zweites Ende ein zweites Kopplungsmittel (60) umfasst, das mit dem Smartwatch-Gehäuse verbindbar ist,
**dadurch gekennzeichnet, dass** das Uhrarmband ferner umfasst:
mindestens eine Einheit (4), die so konfiguriert ist, dass sie eine konstante Spannung, die über das erste Kopplungsmittel (5) eingegeben wird, in digitale Daten umwandelt,
wobei die Einheit (4) drei oder mehr als drei verschiedene Spannungsteilerschaltungen (4a, 4b, 4c) umfasst, wobei die konstante Spannung jeder der drei oder mehr als drei verschiedenen Spannungsteilerschaltungen zugeführt wird, wobei die Spannungsteilerschaltungen (4a, 4b, 4c) so konfiguriert sind, dass sie korrespondierende Ausgangsspannungen bereitstellen,
wobei die Einheit (4) ferner mindestens einen ADC-Block umfasst, der konfiguriert ist, um die jeweiligen Ausgangsspannungen in digitale Daten umzuwandeln, wobei die digitalen Daten vordefinierten Betriebswerten entsprechen, die eine Farbe basierend auf dem Rot-, Grün- und Blau-Modell, RGB Modell, repräsentieren,
wobei das Uhrarmband so konfiguriert ist, dass es die digitalen Daten über die erste Kopplungseinrichtung (5) an die Smartwatch überträgt, so dass eine Beleuchtungsfarbe der Smartwatch (2) in Abhängigkeit von den digitalen Daten eingestellt wird.

2. Uhrarmband nach Anspruch 1,
wobei mindestens eine Kopplungseinrichtung (5) und vorzugsweise beide Kopplungseinrichtungen (5, 60) eine mit der Einheit verbundene digitale Datenübertragungseinrichtung bereitstellen, wobei digitale Daten über die Kopplungseinrichtung (5, 60) in das Uhrarmband (1) eingespeist werden.

3. Uhrarmband nach Anspruch 1,
wobei die Einheit (4) eine drahtlose Datenübertragungseinheit umfasst, wobei digitale Daten mit einer weiteren Vorrichtung ausgetauscht werden, wobei Einstelldaten über die drahtlose Datenübertragungseinheit empfangen werden.

4. Smartwatch umfassend:
ein Uhrarmband (1) gemäß einem der vorstehenden Ansprüche,
eine Lichtquelle,
mindestens eine Kopplungseinrichtung zur Kopplung mit mindestens dem ersten Kopplungsmittel des Uhrarmbandes,
wobei die Smartwatch so konfiguriert ist, dass sie eine konstante Spannung über das mindestens eine Kopplungselement ausgibt und digitale Daten empfängt, die vom Uhrenarmband über das mindestens eine Kopplungselement übertragen werden
wobei eine Prozessoreinheit so konfiguriert ist, dass sie die digitalen Daten zum Modifizieren einer Beleuchtungsfarbe in Abhängigkeit von den digitalen Daten verarbeitet,
wobei die digitalen Daten vordefinierten Betriebswerten entsprechen, die eine Farbe basierend auf dem Rot-, Grün- und Blau-Modell, RGB-Modell, darstellen.

5. Verfahren zum Ändern der Beleuchtungsfarbe eines Zifferblattes einer Smartwatch,
Bereitstellung einer Smartwatch (2) mit einem Uhrarmband (1) gemäß einem der Ansprüche 1 bis 3, Übertragen digitaler Daten von der Smartwatch (2) zum Uhrarmband (1),
Transformieren der genannten digitalen Daten durch eine Einheit des Uhrarmbandes (1),
wobei die Einheit (4) drei oder mehr als drei verschiedene Spannungsteilerschaltungen (4a, 4b, 4c) umfasst, wobei die konstante Spannung jeder der drei oder mehr als drei verschiedenen Spannungsteilerschaltungen zugeführt wird, wobei die Spannungsteilerschaltungen (4a, 4b, 4c) so konfiguriert sind, dass sie korrespondierende Ausgangsspannungen bereitstellt,
wobei die Einheit (4) ferner mindestens einen ADC-Block umfasst, der konfiguriert ist, um die jeweiligen Ausgangsspannungen in digitale Daten umzuwandeln, wobei die digitalen Daten vordefinierten Betriebswerten entsprechen, die eine Farbe basierend auf dem Rot-, Grün- und Blau-Modell, RGB Modell, repräsentieren,
Übertragen der digitalen Daten über die erste Kopplungseinrichtung (5) an die Smartwatch, so dass eine Beleuchtungsfarbe der Smartwatch (2) in Abhängigkeit von den digitalen Daten eingestellt wird.

6. Verfahren nach Anspruch 5,
wobei die digitalen Daten einer Prozessoreinheit zur Verarbeitung der digitalen Daten zugeführt werden, um eine Beleuchtung der Smartwatch (2) in Abhängigkeit von den digitalen Daten zu modifizieren.

7. Verfahren nach den Ansprüchen 5 bis 6,
wobei eine Lichtquelleneinheit der Smartwatch (2) so konfiguriert ist, dass sie Licht verschiedener Farben emittiert, wobei die Einheit digitale Daten bereitstellt, die die jeweilige Farbe repräsentieren, wobei die bereitgestellten digitalen Daten an die Smartwatch übertragen werden, um die Beleuchtung der Smartwatch (2) einzustellen.

8. Verfahren nach den Ansprüchen 5 bis 7,
wobei das Uhrarmband (1) mindestens zwei Uhrarmbandteile (1a, 1b) umfasst, wobei ein Uhrarmbandteil (1a) mit dem ersten Kopplungsmittel (5) verbunden ist und das zweite Uhrarmbandteil (1b) mit dem zweiten Kopplungsmittel (60) verbunden ist,
wobei jedes Kopplungsmittel (5, 60) digitale Daten für die Transformation bereitstellt,
wobei ein oder beide Uhrbandteile (1a, 1b) mit einer Einheit (4) ausgestattet sind,
wobei die Beleuchtung des Ziffernblatts der Uhr von vordefinierten Regeln abhängt, falls das Uhrarmband (1) unterschiedlich konfigurierte Spannungsteilerschaltungen (4a, 4b, 4c) aufweist.

9. Verfahren nach den Ansprüchen 5 bis 8,
wobei das Uhrarmband (1) mindestens zwei Uhrarmbandteile (1a, 1b) aufweist, wobei ein Uhrarmbandteil (1a) mit dem ersten Kopplungsmittel (5) verbunden ist und das zweite Uhrarmbandteil (1b) mit dem zweiten Kopplungsmittel (60) verbunden ist,
wobei ein oder beide Kopplungsmittel (5, 60) digitale Daten für die Transformation bereitstellen,
wobei nur ein Uhrarmbandteil (1a) mit der Einheit (4) ausgestattet ist.

10. Computerprogrammprodukt aufweisend Befehlen, die, wenn das Programm von der Smartwatch nach Anspruch 4 ausgeführt wird, die Smartwatch veranlassen, ein Verfahren nach den Ansprüchen 5 bis 9 auszuführen.

## Revendications

1. Bracelet de montre (1) pouvant être connecté à une montre intelligente (2),
le bracelet de montre (1) comprenant au moins :
un corps principal destiné à être accouplé avec un bras d'un être humain,
dans lequel le corps principal a au moins deux extrémités, dans lequel une première extrémité comprend un premier moyen de couplage (5) pouvant être connecté à un boîtier de montre intelligente et une seconde extrémité comprend un second moyen de couplage (60) pouvant être connecté audit boîtier de montre intelligente,
**caractérisé en ce que** le bracelet de montre comprend en outre
au moins une unité (4) configurée pour transformer une tension constante entrée via ledit premier moyen de couplage (5) en données numériques,
dans lequel l'unité (4) comprend trois ou plus de trois circuits diviseurs de tension différents (4a, 4b, 4c), dans lequel la tension constante est appliquée à chacun des trois ou plus de trois circuits diviseurs de tension différents, dans lequel lesdits circuits diviseurs de tension (4a, 4b, 4c) sont configurés pour fournir des tensions de sortie rétrospectives,
dans lequel l'unité (4) comprend en outre au moins un bloc ADC configuré pour convertir lesdites tensions de sortie respectives en données numériques, dans lequel lesdites données numériques correspondent à des valeurs de fonctionnement prédéfinies représentant une couleur basée sur le modèle RGB (rouge, vert et bleu),
dans lequel le bracelet de montre est configuré pour transférer lesdites données numériques via ledit premier moyen de couplage (5) à la montre intelligente, de sorte qu'une couleur d'éclairage de la montre intelligente (2) est ajustée en fonction des données numériques.

2. Bracelet de montre selon la revendication 1,
dans lequel au moins un moyen de couplage (5) et de préférence les deux moyens de couplage (5, 60) fournissent des moyens de transfert de données numériques connectés à l'unité, dans lequel les données numériques sont introduites dans le bracelet de montre (1) via lesdits moyens de couplage (5, 60).

3. Bracelet de montre selon la revendication 1,
dans lequel l'unité (4) comprend une unité de transfert de données sans fil, dans laquelle des données numériques sont échangées avec un autre dispositif dans lequel des données d'ajustement sont reçues via ladite unité de transfert de données sans fil.

4. Smartwatch comprenant :
un bracelet de montre (1) selon l'une des revendications précédentes,
une source de lumière,
au moins un élément d'accouplement pour l'accouplement avec au moins le premier moyen d'accouplement du bracelet de montre,
dans lequel la montre intelligente est configurée pour produire une tension constante via ledit au moins un élément de couplage et pour recevoir des données numériques transférées par le bracelet de montre via ledit au moins un élément de couplage
dans laquelle une unité de traitement est configurée pour traiter les données numériques afin de modifier une couleur d'éclairage en fonction desdites données numériques,
dans laquelle lesdites données numériques correspondent à des valeurs d'opération prédéfinies représentant une couleur basée sur le modèle RVB (rouge, vert et bleu).

5. Méthode pour changer la couleur d'éclairage du cadran d'une montre intelligente,
Fournir une montre intelligente (2) ayant un bracelet de montre (1), selon l'une des revendications 1 à 3,
Transmission de données numériques de la montre intelligente (2) au bracelet de montre (1), Transformation desdites données numériques par une unité de bracelet (1),
dans lequel l'unité (4) comprend trois ou plus de trois circuits diviseurs de tension différents (4a, 4b, 4c), dans lequel la tension constante est appliquée à chacun des trois ou plus de trois circuits diviseurs de tension différents, dans lequel lesdits circuits diviseurs de tension (4a, 4b, 4c) sont configurés pour fournir des tensions de sortie rétrospectives,
dans lequel l'unité (4) comprend en outre au moins un bloc ADC configuré pour convertir lesdites tensions de sortie respectives en données numériques, dans lequel lesdites données numériques correspondent à des valeurs de fonctionnement prédéfinies représentant une couleur basée sur le modèle RGB (rouge, vert et bleu),
Transfert desdites données numériques via ledit premier moyen de couplage (5) à la montre intelligente, de sorte qu'une couleur d'éclairage de la montre intelligente (2) soit ajustée en fonction des données numériques.

6. Méthode selon la revendication 5,
dans laquelle les données numériques sont envoyées à une unité de traitement pour traiter les données numériques afin de modifier un éclairage de ladite montre intelligente (2) en fonction desdites données numériques.

7. Méthode selon les revendications 5 à 6,
dans lequel une unité de source de lumière de la montre intelligente (2) est configurée pour émettre de la lumière de différentes couleurs, dans lequel l'unité fournit des données numériques représentant la couleur respective, dans lequel lesdites données numériques fournies sont transférées à la montre intelligente pour ajuster l'éclairage de ladite montre intelligente (2).

8. Méthode selon les revendications 5 à 7,
dans lequel le bracelet de montre (1) comprend au moins deux parties de bracelet de montre (1a, 1b), dans lequel une partie de bracelet de montre (1a) est reliée au premier moyen d'accouplement (5) et la deuxième partie de bracelet de montre (1b) est reliée au deuxième moyen d'accouplement (60),
où chaque moyen de couplage (5, 60) fournit des données numériques pour la transformation,
dans lequel une ou les deux parties du bracelet de montre (1a, 1b) sont équipées d'une unité (4),
dans lequel l'éclairage du cadran de la montre dépend de règles prédéfinies dans le cas où ledit bracelet de montre (1) a des circuits diviseurs de tension (4a, 4b, 4c) configurés différemment.

9. Méthode selon les revendications 5 à 8,
dans lequel le bracelet de montre (1) comprend au moins deux parties de bracelet de montre (1a, 1b), dans lequel une partie de bracelet de montre (1a) est reliée au premier moyen d'accouplement (5) et la deuxième partie de bracelet de montre (1b) est reliée au deuxième moyen d'accouplement (60),
où l'un ou les deux moyens de couplage (5, 60) fournissent des données numériques pour la transformation,
où une seule partie du bracelet de montre (1a) est équipée de l'unité (4).

10. Produit de programme d'ordinateur comprenant des instructions qui, lorsque le programme est exécuté par la montre intelligente de la revendication 4, font en sorte que la montre intelligente exécute une méthode selon les revendications 5 à 9.
